# EUROPEAN PATENT APPLICATION

(11) **EP 3 115 528 A1**
(43) Date of publication of application: **11.01.2017**
(21) Application number: 15382362.0
(22) Date of filing: 10.07.2015
(51) Int. Cl.: E04H 9/02, E04B 1/04, E04B 1/61

(54) **CONSTRUCTION ARRANGEMENT AND DETACHABLE CONNECTION ASSEMBLY FOR THIS CONSTRUCTION ARRANGEMENT**

(71) Applicant: Fundacíon Tecnalia Research & Innovation, 20009 San Sebastian (Guipuzcoa) (ES)
(72) Inventor: CALDERÓN URISZAR - ALDACA, Íñigo, 20009 San Sebastián - Guipúzcoa (ES); ARAMBURU IBARLUCEA, Amaia, 20009 San Sebastián - Guipúzcoa (ES); CHICA PAEZ, José Antonio, 20009 San Sebastián - Guipúzcoa (ES)
(74) Representative: Balder IP Law, S.L.

(57) **Abstract**

The construction arrangement comprises a first construction wall (1) and a second construction wall (2). The walls (1, 2) are arranged adjacent in a vertical plane, such that the first construction wall and the second construction wall (1, 2) have an edge in contact and such that three directions (X, Y, Z) are defined, an X-direction (X) corresponding to the contact edge direction, a Y-direction (Y) corresponding to a direction perpendicular to the X-direction and contained in the vertical plane and a Z-direction (Z) perpendicular to both the X and Y directions (X, Y), such that it is a direction normal to the first and second construction walls (1, 2). The construction comprises a connection assembly capable of transmitting forces in the X and the Y direction (X, Y) between the walls (1, 2) and attachable upon a surface of the walls (1, 2) normal to the Z-direction. The connection comprises at least two tension units (3, 4), each tension unit (3, 4) comprising two connection paddles (31, 32, 41, 42), attachable upon a surface of the first and second walls (1,2) normal to the Z direction by means of detachable anchorage means (11, 12, 21, 22) and a tension shaft (5, 6) connecting the connection paddles (31, 32, 41, 42). For each tension unit (3, 4) a first connection paddle (31 41) is fixed to the first wall (1) on a surface normal to the Z-direction (Z) an a second connection paddle (32, 42) is fixed to the second wall (2) on the cited surface normal to the Z-direction (Z) such that in case of shearing efforts between the walls along the X-direction at least one of the tension units (3,4) works under tension.

## Description

### TECHNICAL FIELD

The present invention relates to means of connection between construction walls (precast or not) of buildings in places where horizontal loads could appear as the design-dominant action, such as earthquake-prone areas or windy zones. To be competitive, an universal and open system, that suits different geometries and possible cases, is needed, and whose joint is dry and simple, for joining the construction walls without wasting time in concrete hardening or specialized guilds to weld or execute the formwork that increase the building costs. In cases regarding high-rise buildings in seismic zones it is necessary to consider the horizontal actions, like wind and earthquake, in addition to vertical permanent and live loads, so that the connecting means ensure stability even under heavy dynamic loads.

### STATE OF THE ART

Known are in the art the construction arrangements comprising:
- a first construction wall;
- a second construction wall; the walls being arranged adjacent in a vertical plane, such that both walls have an edge in contact and such that three directions are defined:
   - a X-direction corresponding to the contact edge direction;
   - a Y-direction corresponding to a direction perpendicular to the X-direction and contained in the vertical plane;
   - a Z-direction perpendicular to both the X and Y directions, such that it is a direction normal to the walls;
- a connection assembly partially embedded in the walls during the casting process of the walls and capable of transmitting forces in X and Y directions between the walls.

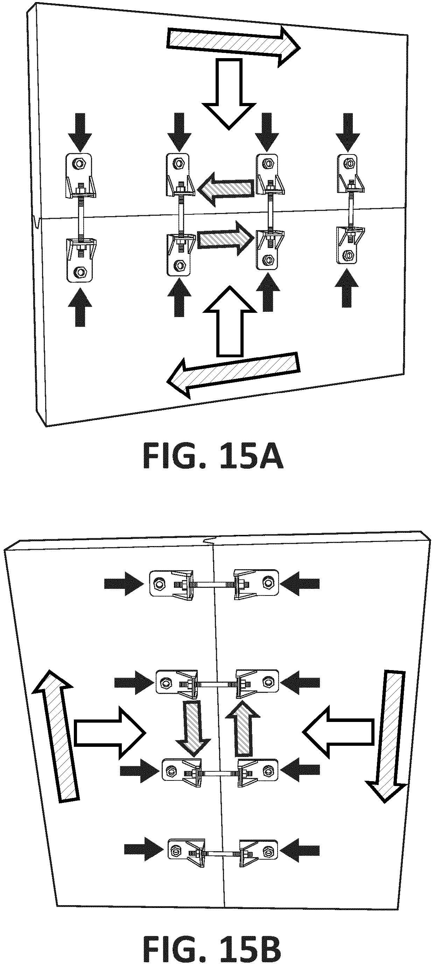

Such solution is shown in FIG. 15. The connection assembly comprises anchors that are left embedded in the panels or walls. The anchors are formed by anchorage means welded perpendicular to the inner surface of a steel plate, so that the outer surface of the plate is leveled in the wall surface plane whilst the anchorage means inward the plate remaining fixed once the concrete has hardened. The anchors are placed such that the outer plate surfaces of both walls remain positioned one beside the other once attached.

Then, a joint-covering steel plate is welded externally to both outer plates, by two weld beads along the plate edges. Thus, an effective and cheap one-sided junction is achieved.

However, despite its simplicity, this system presents many drawbacks:
- This solution is not an universal and open system, because it has to be placed in specific walls where anchorage means and their inner plate are embedded before concrete hardening, not suiting different geometries and possible cases, and with wet joint done by welding, not being detachable.
- The anchors cannot be installed on existing walls.
- The resistance to horizontal seismic actions, by shear resistance of the plate, is not enough.
- Possible tearing of the weld.
- The joint system is non-detachable and defective or damaged junctions are not replaceable.

ES2161597B1, discloses a system for building construction by means of prefabricated elements with wet joints, wherein resistant structural steel anchors are embedded in the walls, for horizontally and vertically joining with adjacent walls.

The anchors are welded together, though they are not intended for seismic areas, neither for supporting extreme wind actions. The wet joint does not allow assessment of the elements or replacement of deteriorated ones.

Patent CN202273335U relates to a vertical mixed connection structure for assembling precast internal wallboards with shear wall structures, it discloses a complex connection mechanism with in situ placement of concrete in the shear walls, wherein openings are left in the concrete for pouring concrete and mortar that, upon hardening, complete the union. These are robust but very expensive systems.

Patent KR100867414B1 relates to a precast concrete retaining wall and provides means to bond adjacent elements by their corresponding edges, which are provided with a groove and tongue system to fit, and using threaded devices. The resistant mechanism to shearing efforts in the edge direction is in this case provided letting threaded rods embedded in concrete, whose extreme is practicable by means of an opening in the hardened concrete. In the threaded rod of one wall an inner threaded circular hollow section CHS steel profile is assembled, while in the other wall an outer threaded one, both attached to their corresponding threaded rods by nuts, then the CHS are screwed together, and the opening is filled with fresh concrete. Therefore, the join system is not universal and open, being able only to be used in walls with embedded and matching threaded rods and openings, nor detachable, because it is embedded when the fresh concrete is hardened, and wet because it uses fresh concrete, resisting by shearing of two threaded CHS.

Application US 12/989,992 relates to a joining element between modules for constructions that has been specially conceived for stacking of modules in seismic zones.

On the other hand, many buildings are made of reinforced concrete vertical walls. The length of the vertical walls of reinforced concrete is an advantage to resist horizontal actions contained in its plane, since it behaves as a large depth beam, which allows for transmitting shear forces through a scheme of struts and tensile elements (rebars) that presents so much stiffness and resistant to shear forces, even when slightly reinforced.

Therefore, reinforced concrete walls are used in building primarily to provide resistance to shear efforts caused by horizontal forces such as wind and earthquake that receive the name of "shearing walls." Sometimes, in addition to transmitting shear forces, the walls are bearing walls and other elements themselves, thus contributing to the vertical resistance to its own weights, dead loads, snow loads and vertical use overloads that the building will have to resist, as in the case of "load bearing walls".

These walls are constructed by pouring concrete on site in successive phases or with prefabricated 2D elements which are usually provided with tongue and groove to facilitate their assembly with a wet joint. In the case of on-site concreting, the section between vertical concreting phases usually is a more vulnerable section, as in the case of prefabricated elements, where the joint between them is the most vulnerable section too.

Thus, the joint or interface between elements or concrete walls will be subjected to shear forces that must be properly resisted. Generally, with large vertical loads and small horizontal loads, said connecting elements and the force of friction generated between phases or elements are enough to ensure the resistance of the building.

However, in seismic and / or windy zones the situation is more complicated since, in effect, larger building masses result in more frictional resistance but, otherwise, in case of earthquake, larger masses produce stronger horizontal forces that are greater than the gain in frictional, causing the building to loose resistance capacity.

To avoid this, the most straightforward solution would be just the opposite, that is to say, lighten the building, because this would reduce the horizontal forces caused by seismic activity, but it also has the negative outcome that the friction forces also decrease, leaving the building exposed to wind actions. Therefore, the best solution is to design the building as light as possible, but with structural reinforcements to resist horizontal actions not dependent on the vertical loads.

The risk to avoid, considering the friction force, the shear force transmission by connecting elements such as connectors, plates, bolts, etc., is the relative displacement between successive wall segments or walls as a result of the seismic action.

This relative displacement between the walls occurs when the magnitude of the actions exceeds the sum of the bearing capacity of all the elements considered above. On the other hand, the solution to this problem of structural safety in existing structures and new work structures, must consider two issues. From the economic point of view, the solutions based on exterior structures are bulky and very expensive and, moreover, with a low aesthetic quality, because in tall building there is a negative visual impact of interventions both from the outside, an added structure, and from inside, where multiple windows are blinded by diagonal bracing elements and give a feeling of unsafety.

Such interventions are hardly admissible, except in cases of urgency about the possible consequences. Considering all, the ideal solution is one that does not represent an excessive burden and which does not increase the mass of the building and that will not affect negatively the aesthetics.

### DESCRIPTION OF THE INVENTION

For overcoming the mentioned drawbacks, the present invention provides for a construction arrangement comprising:
- a first construction wall;
- a second construction wall; the walls (precast or on-site executed walls for a building or pre-existing walls of an already erected building) being arranged adjacent in a vertical plane, such that the first construction wall and the second construction wall have an edge in contact and such that three directions (X, Y, Z) are defined:
   - an X-direction (X) corresponding to the contact edge direction;
   - a Y-direction (Y) corresponding to a direction perpendicular to the X-direction and contained in the vertical plane and;
   - a Z-direction (Z) perpendicular to both the X and Y directions (X, Y), such that it is a direction normal to the first and second construction walls;
- a connection assembly capable of transmitting forces in the X and the Y direction (X, Y) between the walls.

The connection assembly is attachable upon a surface of the walls normal to the Z-direction and comprises at least two tension units, each tension unit comprising:
- two connection paddles attachable upon a surface of the first and second walls normal to the Z direction by means of detachable anchorage means. (thus the connection paddles can be attached to a wall but can be detached if necessary for dismounting the connection assembly for repairing or substitution of any of the elements of the assembly) and
- a tension shaft connecting the connection paddles.

Each tension unit comprises:
- a first connection paddle fixed to the first wall on a surface normal to the Z-direction (Z) and
- a second connection paddle fixed to the second wall on the cited surface normal to the Z-direction (Z);
such that in case of shearing efforts between the walls along the X-direction at least one of the tension units works under tension.

The connection assembly of the invention can be attached to precast or on-site executed walls (which can be part of an already constructed building) or to the walls of an already erected building and can be detached from the walls because none of the elements of the assembly is embedded in the walls.

In an embodiment of the invention the tension shafts are placed forming an angle with respect to the X-direction (X), a first tension shaft is placed forming a positive angle of more than 0 sexagesimal degrees and up to 90 sexagesimal degrees with the X-direction and a second tension shaft is placed forming a negative angle of less than 0 sexagesimal degrees and up to -90 sexagesimal degrees with the X-direction such that in case of movement between the walls along the X-direction (X), it is ensured that at least one of the tension units works under tension. In this embodiment the first and second tension shafts form an angle of opposite sign with respect to the X-direction.

In an embodiment the tension shafts are rods and do not cross.

In another embodiment the tension shafts are placed forming a V, or an inverted V (the V or inverted V shape can be observed if we see the X-direction as an horizontal direction).

In another embodiment the tension shafts cross each other, one first tension shaft being a first rod, whilst a second tension shafts comprises a split central section allowing the passage of the first tension shaft.

The second tension shaft comprises a split section comprising:
- two rod end sections joined to the connection paddle;
- a split central section comprising two connecting rods laterally joined to the rod end sections, such that an aperture for the passage of the first tension shaft is formed.

In an embodiment the tension shafts are placed in parallel with each other and with the Y-direction.

In an embodiment the X-direction is horizontal and the first wall rests onto the second wall. In this embodiment, in case of horizontal loads, like those caused by wind or seism, there are shearing efforts in the X-direction induced to maintain sliding stability. The inventive construction arrangement adds horizontal load resistance, since at least one tension unit is pulled, whatever the sense of the shearing effort, and thus working under tension. This tension force could be decomposed in two forces, one parallel to X-direction, and the other to Y-direction, the first directly transferring shearing forces between walls and the second being added to the normal force, in this case to the vertical permanent and live loads, to provide more resistance by friction, avoiding relative displacement between walls. In case the tension units were completely parallel to Y-direction, then the tension force must be provided by pre-stressing, simply tightening the nuts of one end, thus increasing the resistance by friction.

In an alternative embodiment the X-direction is vertical and the first wall rests besides the second wall. In this embodiment" in case of horizontal loads, like those caused by wind and seism, there are shearing efforts in the X-direction induced to maintain overturning stability, and the inventive construction arrangement adds horizontal load resistance, since at least one tension unit is pulled, whatever the sense of the shearing effort, and thus working under tension, this tension force could be decomposed in two forces, one parallel to X-direction, and the other to Y-direction, the first directly transferring shearing forces between walls and the second being added to the normal force, to provide more resistance by friction. In case the tension units were completely parallel to Y-direction, then the tension force must be provided by pre-stressing, simply tightening the nuts of one end, thus increasing the resistance by friction.

Therefore, this arrangement overcomes the state of the art drawbacks since:
- It can be applied to an already existing building;
- Minimum work has to be done for fixing it;
- There is no need to wait for concrete hardening to have shearing resistance;
- The components are not expensive;
- It provides for an easy maintenance and a constant monitoring;
- It allows the easy replacement of damaged ones after seism events.

The connection paddle can comprise a lug head and a gripping assembly joined to the lug head. The lug head can be angled with respect to the gripping assembly. The detachable anchorage means can comprise anchorage means for anchoring the lug heads.

The connection paddles can comprise stiffening lateral plates joining the lug head and the gripping assembly.

The gripping assembly can comprise through holes for the insertion of the tension shaft ends, the tension shafts ends being threaded for the insertion of a fixing and regulating bolt, with their corresponding washers such that it allows for a simple and fast installation.

The construction arrangement can comprise fixing and regulating bolts on each side of the gripping assembly.

The contact edges of the walls can comprise means to withstand the forces in Z-direction, perpendicular to them, that may be tongue and groove systems or others providing the same restraining effect in Z-direction. Therefore, the tension units are not tensioned in the Z-direction, since the engagement between walls itself withstand the Z-forces.

The tension units are preferably made of steel and the construction walls are concrete walls.

Another object of the invention is a detachable connection assembly for a construction arrangement provided with a first construction wall and a second construction wall arranged adjacent in a vertical plane, such that the first and second construction walls have an edge in contact and such that three directions (X, Y Z) are defined:
- an X-direction (X) corresponding to the contact edge direction;
- a Y-direction (Y) corresponding to a direction perpendicular to the X-direction and contained in the vertical plane;
- a Z-direction (Z) perpendicular to both the X and Y directions (X, Y), such that it is a direction normal to the first and second construction walls;
The connection assembly is attachable upon a surface of the walls normal to the Z-direction (Z);

The connection assembly comprises two tension units, each tension unit comprising:
- two connection paddles, attachable upon a surface of the first and second walls normal to the Z direction by means of detachable anchorage means and
- a tension shaft connecting the connecting paddles.

The connection assembly of the invention is capable of transmitting forces in the X and the Y direction (X, Y) between the walls such that in case of shearing efforts between the walls along the X-direction at least one of the tension units works under tension (or both if the tension units are prestressed).

### Embodiments with tension units forming an angle and not crossing

- the tension shafts are rods and do not cross.
- the tension units are placed forming a V, or an inverted V.
- the lug heads of the connection paddles placed at the vertex of the V or the inverted V have a common anchorage means or their specific one each.

### Embodiments with crossed tension units

- the tension shafts cross each other, one of the tension shafts being a first rod, the other of the tension shafts comprising a split central section allowing the passage of the first rod. This arrangement, placed forming an X, requires less space in the X-direction than previous one, being more efficient in cases with less available space. Preferably, the tension shaft comprising a split section comprises:
   - two rod-end sections joined to the gripping assembly;
   - a split central section comprising two connecting rods laterally joined to the rod-end sections, forming an aperture for the passage of the first rod.

### Embodiments with parallel tension units

- the tension shafts are rods and are parallel to each other and to Y-direction.
- the tension units are placed forming a double I.

The invention also relates to a connection assembly for a construction arrangement provided with a first construction wall and a second construction wall arranged adjacent in a vertical plane, such that both walls (precast or on-site executed walls for a building or pre-existing walls of an already erected building) have an edge in contact and such that three directions are defined:
- an X-direction corresponding to the contact edge direction;
- a Y-direction corresponding to a direction perpendicular to the X-direction and contained in the vertical plane and
- a Z-direction perpendicular to both the X and Y directions, such that it is a direction normal to the walls;
the connection assembly being destined to be placed on the same side of the walls in relation with the Z-direction;
characterised in that the connection assembly comprises two tension units, each tension unit comprising:
- two connection paddles, each connection paddle comprising a lug head and a gripping assembly perpendicular to the lug head;
- a tension shaft connecting the gripping assemblies and
- an anchorage mean which anchors the lug heads to the walls;

Wherein a lug head of each tension unit can be fixed to one of the walls on its surface normal to the Z-direction and the other lug head of each unit can be fixed to the other wall on its surface normal to the Z-direction.

Finally, the invention relates to a building comprising construction walls stacked vertically or placed aside, which comprises any of the inventive construction disclosed above.

### BRIEF DESCRIPTION OF THE DRAWINGS

To complete the description, and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Fig. 1 shows the main components of the inventive connection assembly;
Fig. 2 is a combination of an exploded view of the connection paddles, and the mounted connection paddles;
Fig. 3 shows a bifurcated tension shaft;
Fig. 4A y 4B show two vertical walls or panels before stacking vertically/horizontally;
Fig. 5A y 5B show two vertical walls stacked horizontally/vertically, and the main directions defined in the present document X, Y and Z;

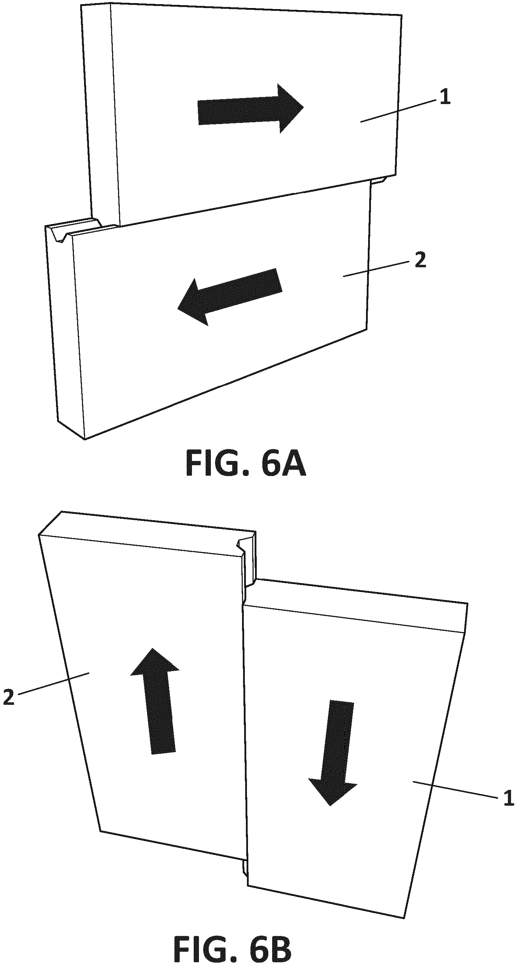

Fig. 6A y 6B show the relative displacement between consecutive reinforced construction walls or panels that can occur under horizontal loading such as wind or seism in presence of shearing efforts;
Fig. 7A y 7B show a forces diagram in case of horizontal loading, keeping the sliding stability by the invention effect;
Fig. 8 to 10 show the main installation steps;
Fig. 11A y 11B show the inverted-V arrangement, wherein both tension units share a common anchorage mean;
Fig. 12A y 12B show the inverted-V arrangement, wherein each tension units is fixed to the upper wall with only one anchor;
Fig. 13A y 13B show an arrangement wherein the tension units are placed vertically and parallel to each other in the case where only vertical forces are transmitted, like in the case of a seism with vertical accelerations.
Fig. 14A y 14B show an arrangement wherein the tension units are placed vertically and parallel to each other in the case where only a bending moment in Z-axis is transmitted, like in the case of horizontal loads.
Fig. 15A y 15B show an arrangement wherein the tension units are placed vertically and parallel to each other in the case where both vertical and shear forces are transmitted, the force obtained by prestress of the tension units increase the normal reaction between wall surfaces, raising the friction resistance to overcome the shearing force.

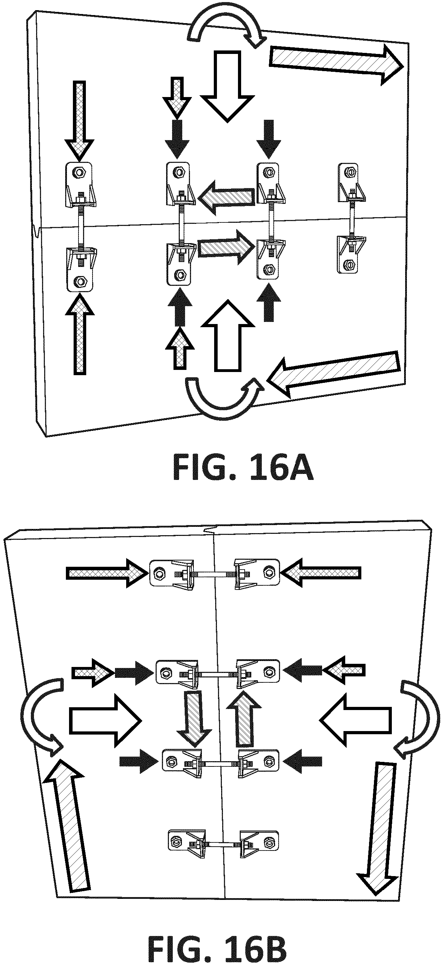

Fig. 16A y 16B show an arrangement wherein the tension units are placed vertically and parallel to each other in the case that vertical and shear forces and bending moment in Z-axis are transmitted, different pre-stressing of the tension units is present in this case, with higher prestress in intermedium tension units and lesser in extreme ones, this allows the intermedium ones, that are not very stressed under bending moment, to be more prestressed, thus increasing the friction resistance to overcome the shearing forces, while the extreme ones are less prestressed to better resist the bending moment.

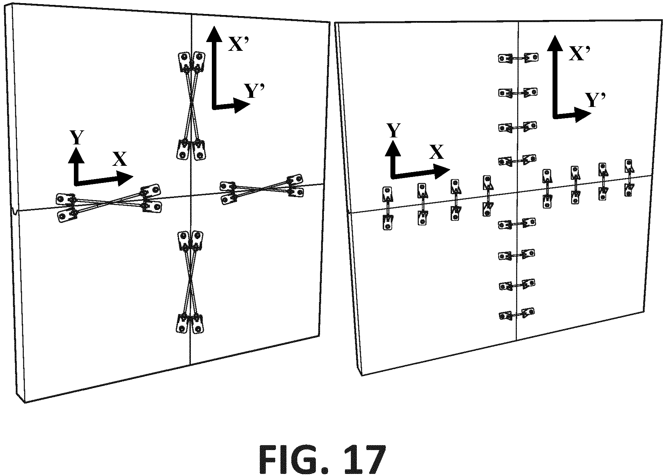

Fig. 17 shows the aspect of several walls in vertical plane, placed one upon other and one next to other, with connection assemblies of the invention joining their corresponding joints.

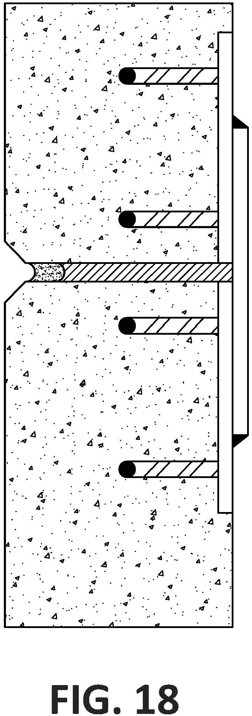

Fig. 18 shows a prior art arrangement using anchors partially embedded in the walls and welded plates.

### DESCRIPTION OF PREFERRED EMBODIMENTS

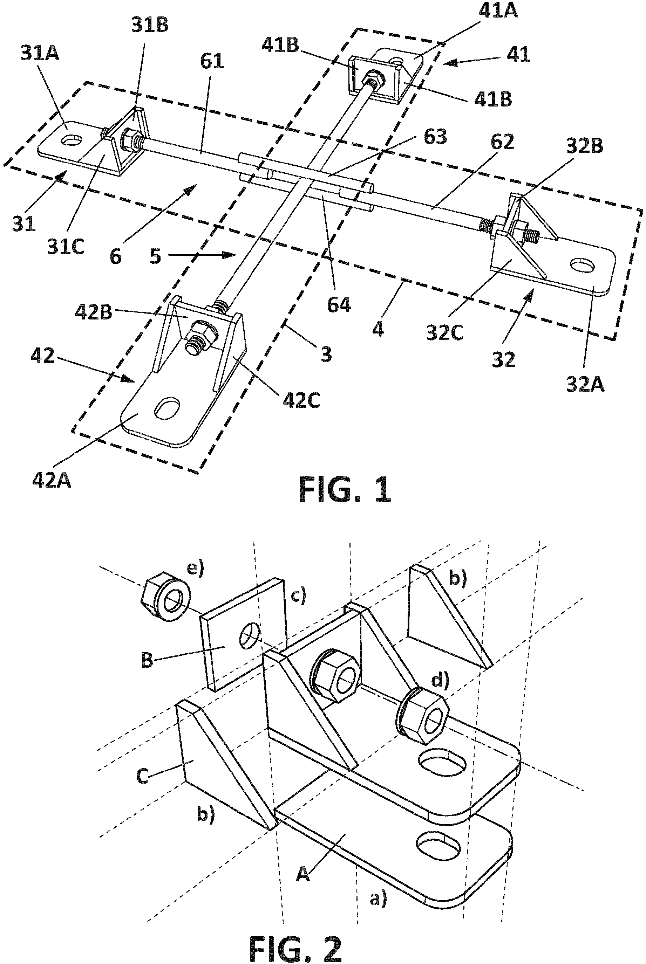

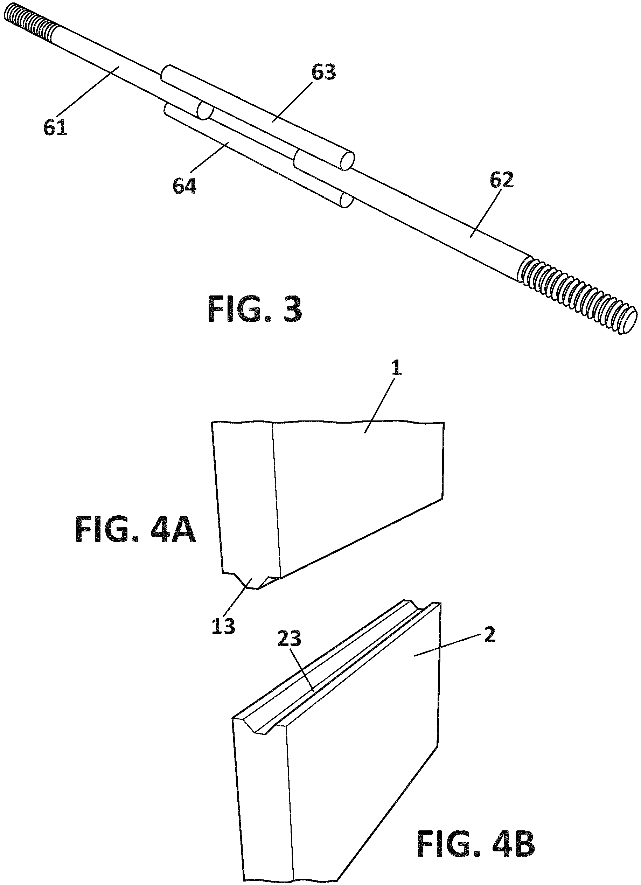

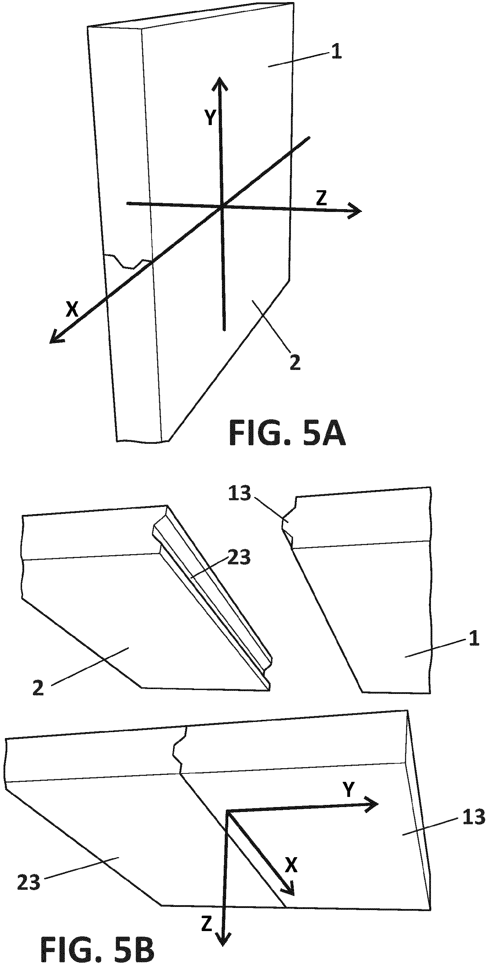

The present invention, see for example Fig. 1 and Fig. 4, relates to a construction arrangement comprising:
- a first construction wall 1;
- a second construction wall 2; the walls 1, 2 being arranged adjacent in a vertical plane, such that both walls 1, 2 have an edge in contact and such that three directions X, Y and Z are defined, as shown in Figs. 5A and 5B:
   - an X-direction X corresponding to the contact edge direction;
   - a Y-direction Y corresponding to a direction perpendicular to the X-direction and contained in the vertical plane;
   - a Z-direction Z perpendicular to both the X and Y directions X, Y, such that it is a direction normal to the walls 1, 2;
- a connection assembly being capable of transmitting forces in the X and the Y directions X, Y, between the walls 1, 2, the connection assembly being placed on the same side of the walls in relation with the Z-direction; by same side it is understood that all the visible components of each connection assembly are on the same side of the resulting wall.

The inventive connection assembly comprises two tension units 3, 4, each tension unit 3, 4 comprising:
- two connection paddles 31, 32, 41, 42, each connection paddle comprising a lug head 31 A, 32A, 41 A, 42A and a gripping assembly 31 B, 32B, 41 B, 42B joined to the lug head 31 A, 32A, 41 A, 42A;
- a tension shaft 5, 6 connecting the gripping assemblies 31 B, 32B, 41 B, 42B;
- at least one anchorage mean 11, 12, 21, 22 which anchors the lug heads 31 A, 32A, 41 A, 42A to the walls 1, 2;
Wherein, for each tension unit 3, 4:
- a lug head 31 A, 41A is fixed to one of the walls 1, 2 on its surface normal to the Z-direction Z;
- the other lug head 32A, 42A is fixed to the other wall 2, 1 on its surface normal to the Z-direction Z;

Thus, the connection paddles 31, 32, 41, 42 are the points to transfer efforts between the tension shafts and the anchorage means. The tension shafts are destined to transfer efforts between the pairs of connection paddles.

The lug heads 31 A, 32A, 41 A, 42A will generally be perpendicular to the gripping assemblies 31 B, 32B, 41 B, 42B. However, there may be special arrangements conceived for special geometries where this angle could differ from a perpendicular one.

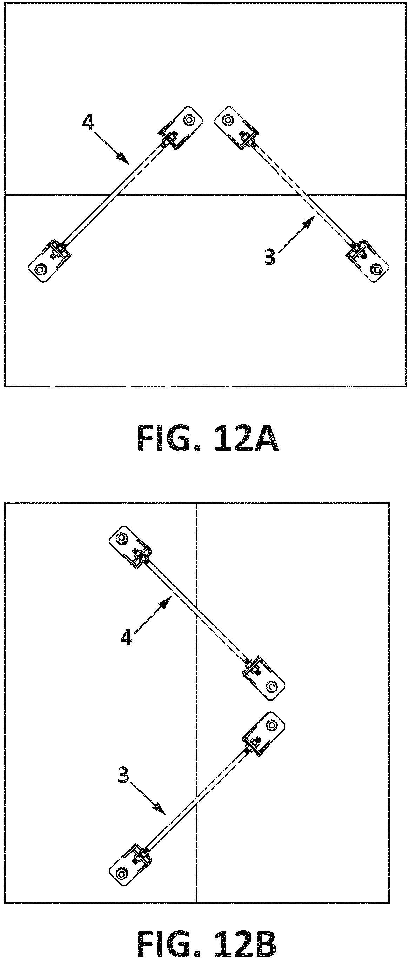

As shown in the figures 4A, 5A, 7A, 11A, 12A, 13A, 14A, 15A, 16A y 17A, the X-direction (X) is horizontal and one of the walls 1 rests onto the other wall 2. However, when vertical relative displacements are foreseen, in presence of shearing efforts caused to keep overturning stability, the walls could be arranged side by side, as in figures 4B, 4B, 7B, 11B, 12B, 13B, 14B, 15B, 16B y 17B.

As shown in Fig. 1, the connection paddles 31, 32, 41, 42 comprise stiffening lateral plates 31C, 32C, 41C, 42C joining the lug head 31 A, 32A, 41 A, 42A and the gripping assembly 31 B, 32B, 41 B, 42B. Thus, a high resistance is ensured. The connection paddles can be obtained by welding. A preferred steel for these components has a minimum yield strength of 275 MPa, and a minimum ultimate strength of 430 MPa.

As shown in Fig. 2, the gripping assembly, 31 B, 32B, 41 B, 42B, comprise through holes for the insertion of the tension shafts 5, 6 ends, the tension shafts 5, 6 ends being threaded for the insertion of a fixing and regulating bolt 31D, 32D, 41D, 42D. In a preferred embodiment, fixing and regulating bolts are provided on each side of the gripping assembly 31 B, 32B, 41 B, 42B. A preferred steel for the bolts, and eventually the washers, has a minimum yield strength of 640 MPa, and a minimum ultimate strength of 800 MPa.

Fig. 3 shows a tension shaft comprising a central split section.

The tension units 3, 4 are made of steel and the construction walls 1, 2 are concrete walls. Of course, the invention can be applied with other construction materials.

As shown in Fig. 4A, 4B and Fig. 5A, 5B, the contact edge of one of the walls 1 comprises a groove 13, and the other of the walls 2 comprises a tongue 23 complementary of the groove 13.

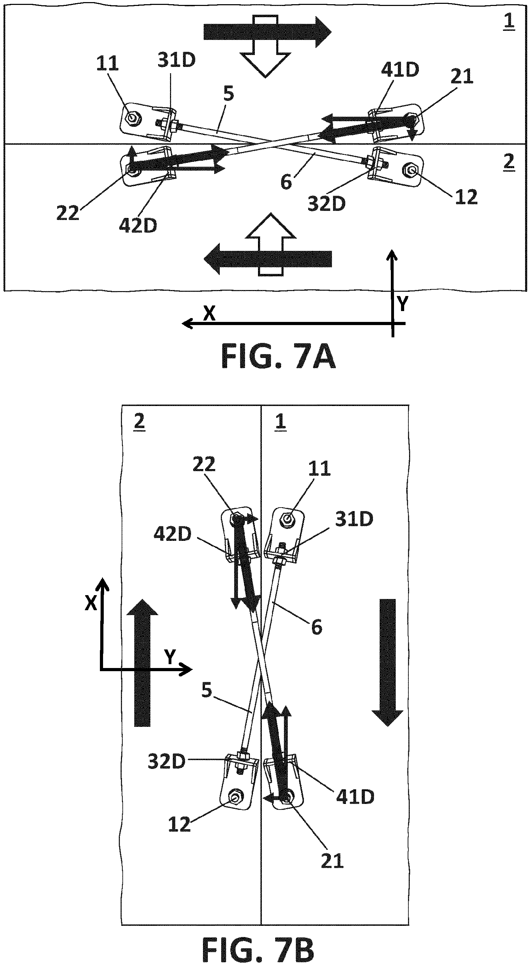

In an embodiment shown in Figs. 7A, 7B, 11A, 11B, 12A, 12B, the tension shafts 5, 6 form an angle of opposite sign with respect to the X-direction (X) such that in case of movement between the walls 1, 2 along the X-direction (X), it is ensured that one of the tension units 3, 4 works under tension. Here, the right oriented upper vector represents the force of the upper wall 1 with respect to the reaction coming from the lower wall 2, depicted as a left oriented parallel vector. The upper vertical vector represent the vertical loads, permanent and live loads, coming from the upper wall that cause and opposite reaction in lower wall depicted as the lower vertical vector, in cases where the walls to be joined are placed one upon the other as in fig 7B. When the walls are placed one beside the other, as in fig 7A, the vertical loads are null. The vectors represented in the anchorage points of the tension units show the forces applied on the walls when tensioned, decomposed in X and Y directions, X and Y. A major an interesting effect of the present invention is that when the normal force is increased by Y-direction Y tension unit force component, the friction force between walls is increased too. In this solution, as opposed to existing solutions, the tension elements do not work in compression, and therefore do not push the upper wall upward in the embodiment represented in fig 7A or one wall away from the other in the embodiment represented in fig 7B, an effect that would tend to decrease the normal reaction, and therefore, the frictional force.

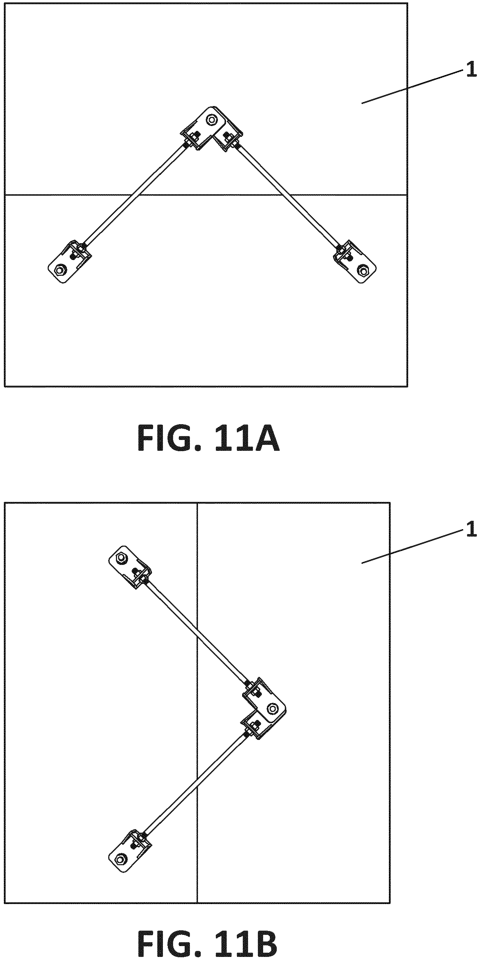

There are many ways of arranging two tension units for obtaining the effect just described. The tension units can form an angle and not cross as disclosed in Figs. 11A, 11B Y 12A, 12B.. Here, the tension shafts 5, 6 are rods and do not cross. In Figs. 11A, 11B the tension units are placed forming an inverted V, in the specific case in which the lug heads of the connection paddles placed at the vertex of the inverted V have a common anchorage mean. The common anchorage, for connection paddles with stiffening lateral plates, is made possible with a lug head long enough. Obviously, a V arrangement is feasible too.

Another way to arrange the tension units is with X arrangement. In this case, the tension shafts 5, 6 cross each other, one of the tension shafts 5 being a first rod, the other of the tension shafts 6 comprising a split central section allowing the passage of the first rod 5. In this case, as shown in Fig. 1, the tension shaft 6 comprising a split section comprises:
- two rod-end sections 61, 62 joined to the gripping assembly 32B, 42B;
- a split central section comprising two connecting rods 63, 64 laterally joined to the rod-end sections 61, 62, such that an aperture for the passage of the first rod 5.

The solutions in V or inverted V avoids having to split one of the tension shafts, and therefore is more optimized in terms of production costs of the connection, but only applies if the walls or shearing walls are long enough because they can occupy double space than the X (crossed) solution.

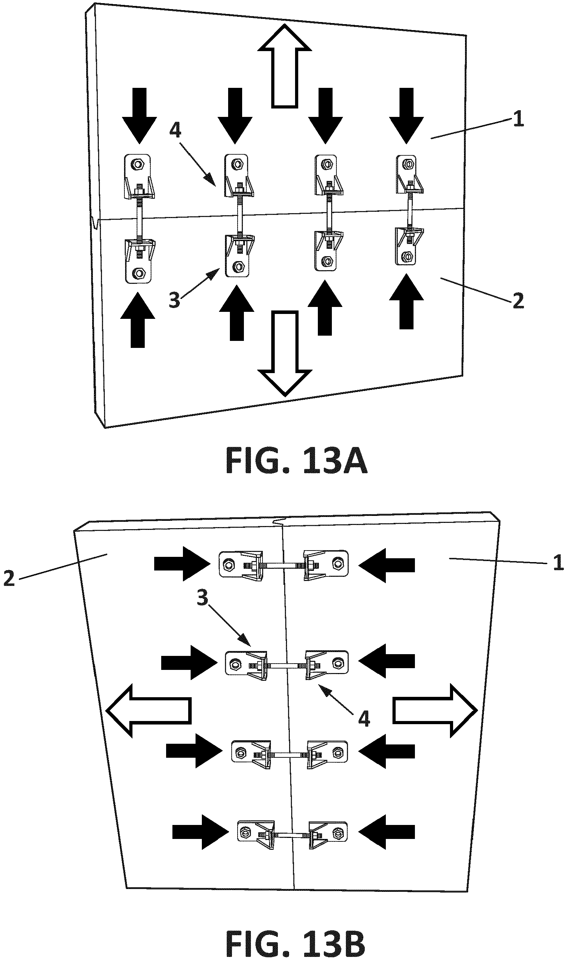

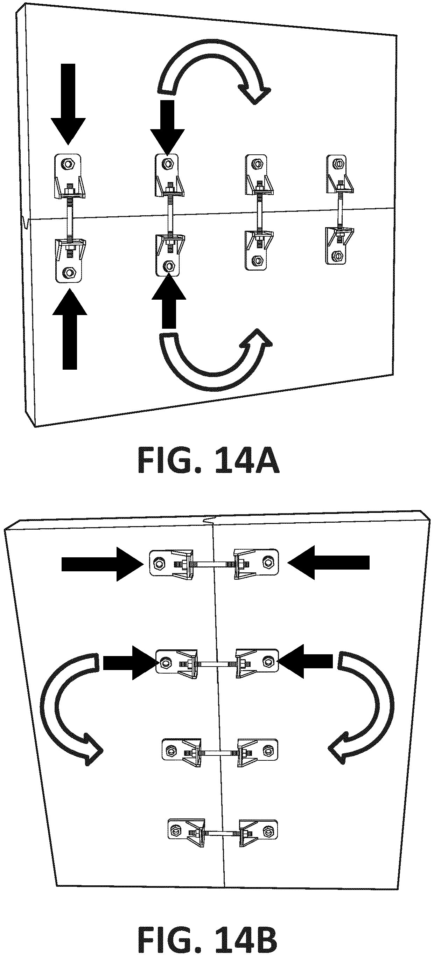

Another way to arrange the tension units is with Double-I arrangement. In this case, the tension units 3, 4 are parallel to each other and with Y-direction Y, as is depicted in Fig. 13A, 13B, 14A, 14B, 15A, 15B y 16A, 16B. In this case, the tension shaft can be:
- Not prestressed, as shown in Fig. 13A, 13B and Fig. 14A, 14B, letting the tension units 3, 4, to transfer passively the Y-direction loads between walls 1, 2, when tend to separate walls.
- Prestressed, as shown in Fig. 15A, 15B, pre-stressing the tension shafts 5, 6 by tightening the nuts e), d) of the gripping assemblies 31 or 32 and 41 or 42, to resist the forces in the X-direction (shearing forces) by friction.
- Partially prestressed, as shown in Fig. 16A, 16B, pre-stressing the tension shafts 5, 6, depending on their position in wall length, by tightening the nuts e), d) of the gripping assemblies 31 or 32 and 41 or 42, to resist the forces in the X-direction (shearing forces) by friction while saving resistance to let the extreme ones to resist the concomitant bending moment.

### Method of placement

The inventive solution allows for the adjustment of the angles and lengths to adapt to the actual position, not theoretical, of the pins embedded in the concrete or construction material. To adjust the length it will suffice to move the nuts with respect to the gripping assemblies. An important issue is not to induce too much prestress in the tension units, if not desired to.

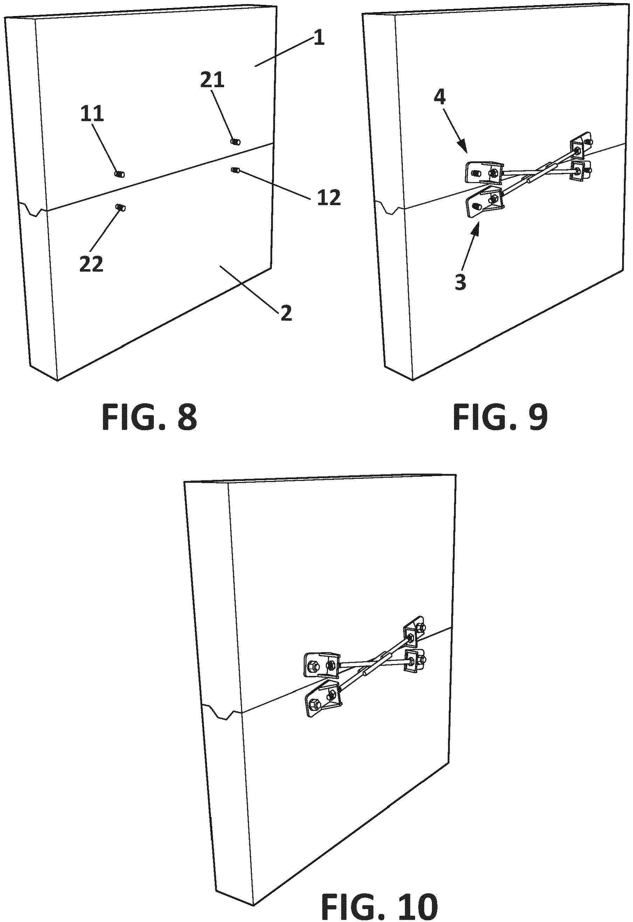

As shown in Fig. 8 the first step to install the connection assemblies is to fix anchorage means to the construction wall material. The second step, shown in Fig. 8, consists in placing the connection paddles on the protruding ends of the anchorage means 11, 12, 21, 22, using the facilities of adaptation in terms of length and angle of the tension units 3, 4. The third step, shown in Fig. 10, is to place the nuts and then fix the assembly.

Then, finally, the fourth and final step is to perform the same operation on the other side of the walls, thus completing the union.

Another way to take advantage of the tension units of the present invention, is placing them parallel, as shown in Figs. 13 to 16, where the tension units are arranged in the Y-direction Y. Obviously, the method of placement is the same.

The tension units may be or may be not prestressed, depending on the conditions of the specific application. Similarly, they may be combined with the angled or crossed solution, forming a mixed solution. This solution should be used in cases where there may be separation of the walls in the Y-direction Y, for example in cases of pronounced vertical seismic accelerations.

It can also be used to increase the normal force between wall segments or walls in cases of upper floors where the weight is small, by pre-stressing the joints, or in any other case where it is necessary to increase the normal force between joint faces of consecutive wall segments or walls.

Different behaviours and tension states may appear depending on the situation.

Fig. 13A represents the case of a Y-direction force, which causes the tension units to tighten at once, thus increasing the normal force, and therefore the frictional force. Fig. 13B represents the same, but being Y direction horizontal instead vertical.

Fig. 14A, 14B represent the effect of a Z-direction bending moment between walls. The tension units of the left, Fig. 14A, and top, Fig. 14B, are stressed, and the other tension units do not work.
Fig. 15A, 15B show the case of application of prestress in the tension units. The downward vectors of wall 1 in fig 15A show the forces applied on the upper wall by the tension units. The upper vertical vector in fig 15A shows the increase in normal force applied to the upper wall. The same applies for the vectors represented in the lower wall. Fig 15 B represents the same effect when the X-direction is a vertical direction.

The behaviour of this arrangement in cases of dynamic bending moments and forces is shown in Figs. 14A, 14B, 16A and 16B.

Fig. 16A, 16B represent the combination of a bending moment in Z-direction and both X and Y- directions forces.

Therefore in this specification a universal solution in steel, which is adaptable, easy to implement and resistant has been presented. The solution just described is intended to provide for shear reinforcement of the joints between reinforced construction wall segments of two dimensions, intended for use in load-bearing and shear walls, standing vertically, one above another, or placed aside. These solutions can be either between precast concrete walls, or between successive phases of in situ concrete or expansion joints, or the same in other construction materials. The placement can be performed in new or existing construction by just passing an anchorage mean, upon completion of a through hole in the concrete.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. Construction arrangement comprising:
- a first construction wall (1);
- a second construction wall (2); the walls (1, 2) being arranged adjacent in a vertical plane, such that the first construction wall and the second construction walls (1, 2) have an edge in contact and such that three directions (X, Y, Z) are defined:
- An X-direction (X) corresponding to the contact edge direction;
- a Y-direction (Y) corresponding to a direction perpendicular to the X-direction and contained in the vertical plane and
- a Z-direction (Z) perpendicular to both the X and Y directions (X, Y), such that it is a direction normal to the first and second construction walls (1, 2);
- a connection assembly capable of transmitting forces in the X and the Y direction (X, Y) between the walls (1, 2);
**characterised in that** the connection assembly is attachable upon a surface of the walls (1, 2) normal to the Z-direction and comprises at least two tension units (3, 4), each tension unit (3, 4) comprising:
- two connection paddles (31, 32, 41, 42), attachable upon a surface of the first and second walls (1,2) normal to the Z direction by means of detachable anchorage means (11, 12, 21, 22) and
- a tension shaft (5, 6) connecting the connection paddles (31, 32, 41, 42);
wherein, for each tension unit (3, 4):
- a first connection paddle (31 41) is fixed to the first wall (1) on a surface normal to the Z-direction (Z) and
- a second connection paddle (32, 42) is fixed to the second wall (2) on the cited surface normal to the Z-direction (Z);
such that in case of shearing efforts between the walls along the X-direction at least one of the tension units (3,4) works under tension.

2. Construction arrangement as in claim 1, wherein the tension shafts (5, 6) are placed forming an angle with respect to the X-direction (X), a first tension shaft (5) is placed forming a positive angle of more than 0 sexagesimal degrees and up to 90 sexagesimal degrees with the X-direction and a second tension shaft (6) is placed forming a negative angle of less than 0 sexagesimal degrees and up to -90 sexagesimal degrees with the X-direction such that in case of movement between the walls (1, 2) along the X-direction (X), it is ensured that at least one of the tension units (3, 4) works under tension.

3. Construction arrangement according to any of the previous claims, wherein the tension shafts (5, 6) are rods and do not cross.

4. Construction arrangement according to any of previous claims, wherein the tension shafts (5, 6) are placed forming a V, or an inverted V.

5. Construction arrangement according to any of previous claims, wherein the tension shafts (5, 6) cross each other, one first tension shaft (5) being a first rod, whilst a second tension shafts (6) comprising a split central section allowing the passage of the first tension shaft (5).

6. Construction arrangement according to claim 5, wherein the second tension shaft (6) comprises a split section comprising:
- two rod end sections (61, 62) joined to the connection paddle (31, 32);
- a split central section comprising two connecting rods (63, 64) laterally joined to the rod end sections (61, 62), such that an aperture for the passage of the first tension shaft (5) is formed.

7. Construction arrangement as in claim 1 wherein the tension shafts (5, 6) are place in parallel with each other and with the Y-direction.

8. Construction arrangement according to any of previous claims, wherein the X-direction (X) is horizontal and the first wall (1) rests onto the second wall (2).

9. Construction arrangement according to any of claims 1 to 3, wherein the X-direction (X) is vertical and the first wall (1) rests besides the second wall (2).

10. Construction arrangement as in any of previous claims wherein each connection paddle comprises a lug head (31 A, 32A, 41 A, 42A) and a gripping assembly (31 B, 32B, 41 B, 42B) joined to the lug head (31 A, 32A, 41 A, 42A); the lug head (31 A, 32A, 41 A, 42A) being angled with respect to the gripping assembly (31 B, 32B, 41 B, 42B); , the arrangement comprising anchorage means (11,12,21,22) for anchoring the lug heads (31 A, 32A, 41 A, 42A).

11. Construction arrangement according to claims 10, wherein the connection paddles (31, 32, 41, 42) comprise stiffening lateral plates (31C, 32C, 41C, 42C) joining the lug head (31 A, 32A, 41 A, 42A) and the gripping assembly (31 B, 32B, 41 B, 42B).

12. Construction element according to claims 10 or 11, wherein the gripping assembly (31 B, 32B, 41 B, 42B) comprise through holes for the insertion of the tension shafts (5, 6) ends, the tension shafts (5, 6) ends being threaded for the insertion of a fixing and regulating bolt (31D, 32D, 41 D, 42D).

13. Construction arrangement according to any of claim 10, 11 or 12, comprising fixing and regulating bolts on each side of the gripping assembly (31 B, 32B, 41 B, 42B).

14. Construction arrangement according to any of the preceding claims, wherein the tension units (3, 4) are made of steel and the construction walls (1, 2) are concrete walls.

15. Detachable connection assembly for a construction arrangement provided with a first construction wall (1) and a second construction wall (2) arranged adjacent in a vertical plane, such that the first and second construction walls (1, 2) have an edge in contact and such that three directions (X, Y, Z) are defined:
- An X-direction (X) corresponding to the contact edge direction;
- a Y-direction (Y) corresponding to a direction perpendicular to the X-direction and contained in the vertical plane and
- a Z-direction (Z) perpendicular to both the X and Y directions (X, Y), such that it is a direction normal to the first and second construction walls (1, 2);
**characterised in that** the connection assembly is attachable upon a surface of the walls normal to the Z-direction (Z) and comprises two tension units (3, 4), each tension unit (3, 4) comprising:
- two connection paddles (31, 32, 41, 42), attachable upon a surface of the first and second walls normal to the Z direction by means of detachable anchorage means (11, 12, 21, 22) and
- a tension shaft (5, 6) connecting the connecting paddles (31, 32, 41, 42);
the connection assembly being capable of transmitting forces in the X and the Y direction (X, Y) between the walls (1, 2) such that in case of shearing efforts between the walls along the X-direction at least one of the tension units (3,4) works under tension.
